# FASCICULE DE BREVET EUROPEEN

(11) **EP 0 554 196 B1**
(45) Date de publication et mention de la délivrance du brevet: **19.11.1997**
(21) Numéro de dépôt: 93420037.9
(22) Date de dépôt: 25.01.1993
(51) Int. Cl.: H04M 1/60, H04M 19/08

(54) **Modulateur du courant d'une ligne téléphonique**
Telefonleitungsstrommodulator
Telephone line current modulator

(30) Priorité: 29.01.1992 FR 9201244
(43) Date de publication de la demande: 04.08.1993
(73) Titulaire: SGS-THOMSON MICROELECTRONICS S.A., 94250 Gentilly (FR)
(72) Inventeur: Arnaud, Thierry, c/o Michel de Beaumont, F-38000 Grenoble (FR); Defretin, Bruno, F-38240 Meylan (FR)
(74) Mandataire: de Beaumont, Michel

(56) Documents cités:
- WO-A-85/03614
- WO-A-88/04502
- WO-A-91/01069
- GB-A- 2 180 723
- IEEE JOURNAL OF SOLID STATE CIRCUITS vol. SC-17, no. 3, Juin 1982, NEW YORK pages 494 - 498; EBERHARDT ET AL.: 'AN INTEGRATED TELEPHONE SPEECH CIRCUIT INCLUDING A LINE FED LOUDSPEAKER AMPLIFIER'

## Description

La présente invention concerne les postes téléphoniques comprenant un amplificateur d'écoute permettant de transmettre sur un haut-parleur la conversation du correspondant.

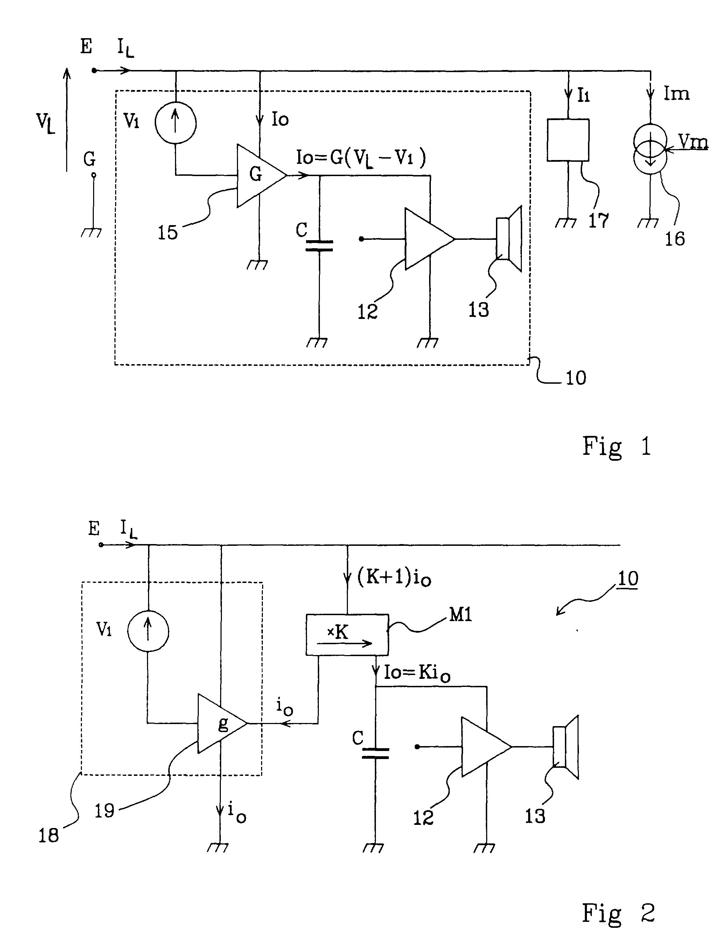

La figure 1 représente schématiquement et de manière très simplifiée une architecture de poste téléphonique à amplificateur d'écoute. Une ligne téléphonique, non représentée, est reliée à une borne active E et à une borne de masse G. La tension disponible entre la borne E et la masse est notée V_{L} et le courant de ligne est noté I_{L}.

Le poste comprend un circuit 10 de gabarit et d'alimentation d'un amplificateur 12 relié à un haut-parleur 13. Ce circuit de gabarit 10 est destiné à établir une caractéristique normalisée V_{L}=f(I_{L}) de la tension de ligne V_{L} en fonction du courant de ligne I_{L}. Le courant consommé pour établir cette caractéristique est exploité pour alimenter l'amplificateur 12.

Le circuit 10 comprend un convertisseur tension-courant 15 de transconductance G, alimenté par la tension de ligne V_{L}, et injectant un courant I₀ dans une capacité C reliée à la masse et dans l'amplificateur 12. La tension d'entrée du convertisseur 15 est établie à une valeur V_{L}-V₁ par une source de tension constante V₁ connectée en opposition entre la borne E et l'entrée du convertisseur 15.

Avec cette configuration, on obtient, d'une part, un courant I₀ d'alimentation de l'amplificateur 12 croissant en fonction de la tension de ligne V_{L}, et d'autre part, la caractéristique V_{L}= f(I_{L}) du gabarit. (On entend par "courant d'alimentation de l'amplificateur" la somme des courants circulant dans l'amplificateur 12 et dans la capacité C).

Les paramètres du circuit de gabarit 10 (V₁, G) sont choisis pour tenir compte des courants consommés par d'autres éléments du poste. Ces autres éléments comprennent un modulateur de courant 16 et des circuits supplémentaires 17. Les circuits supplémentaires 17, comme par exemple un microprocesseur, consomment un courant constant I₁. Le modulateur 16 sert à moduler le courant de ligne I_{L} en fonction d'un signal de parole Vₘ. Le courant traversant le modulateur est noté Iₘ et présente une composante continue Iₘ₀. Ainsi, on a à tout instant un courant de ligne moyen I_{L} = I₀+Iₘ₀+I₁.

La figure 2 illustre une réalisation particulière du circuit de gabarit 10 utilisant des systèmes à miroirs de courant qui se prêtent avantageusement à des réalisations sous forme de circuit intégré. Ce circuit comprend un miroir de courant M1 relié à la borne E et recevant en entrée un courant de référence i₀ petit devant le courant de ligne I_{L}. Ce miroir M1 est multiplieur par un facteur K grand devant 1 (de l'ordre de 40) et fournit le courant I₀ (=Ki₀) d'alimentation de l'amplificateur 12. Le courant de référence i₀ est drainé par un générateur de courant 18, généralement un régulateur shunt, comprenant un convertisseur tension-courant 19 de transconductance g. Ce convertisseur 19 est connecté avec une source de tension V₁ selon la même configuration que la source V₁ et le convertisseur 15 de la figure 1. Avec cette configuration, on a un circuit équivalent au circuit 10 de la figure 1 avec Kg=G.

En pratique, pour que le modulateur 16 puisse moduler le courant de ligne I_{L} avec une amplitude suffisante, il lui faut un courant de repos Iₘ₀ de l'ordre de 5 mA. En outre, le courant I₁ consommé par les circuits supplémentaires 17 est de l'ordre de 5 mA.

Le courant de ligne disponible I_{L} peut, selon la nature et la longueur de la ligne, avoir une valeur faible, de l'ordre de 15 mA seulement, ce qui ne laisse qu'un faible courant, 5 mA, pour alimenter l'amplificateur 12 (en négligeant un courant voisin de i₀ consommé par le circuit de gabarit 10 et non fourni à l'amplificateur).

La demande de brevet WO-A-85/03614 décrit une architecture particulière de poste téléphonique à amplificateur d'écoute où le courant de modulation de ligne est exploité pour alimenter l'amplificateur d'écoute, ce qui permet d'ajouter le courant de repos du modulateur au courant d'alimentation de l'amplificateur.

Toutefois, la solution employée dans la demande de brevet susmentionnée pour exploiter le courant de modulation n'est pas applicable à des architectures utilisant des miroirs de courant, telles que celle de la figure 2.

Un objet de la présente invention est d'exploiter le courant de modulation pour alimenter l'ampl ificateur d'écoute dans une architecture de poste téléphonique du type à miroirs de courant.

Cet objet est atteint grâce à un poste téléphonique relié à une ligne téléphonique et comprenant : un générateur d'un courant de référence proportionnel à la différence entre la tension disponible sur la ligne et une tension de référence ; un miroir de courant recevant un courant d'entrée proportionnel au courant de référence et alimentant un ampli amplificateur d'écoute avec un courant grand par rapport audit courant d'entrée. Selon l'invention, le poste téléphonique comprend un modulateur de courant dont le courant de repos est établi par le courant de référence et délivrant le courant d'entrée au miroir.

Ces objets, caractéristiques et avantages ainsi que d'autres de la présente invention seront exposés en détail dans la description suivante de modes de réalisation particuliers faite en relation avec les figures jointes parmi lesquelles :
La figure 1, précédemment décrite, représente schématiquement une architecture classique de poste téléphonique à amplificateur d'écoute ;
la figure 2, précédemment décrite, représente plus en détail l'architecture de la figure 1 ;
la figure 3 sert à illustrer le principe de l'exploitation du courant de modulation pour alimenter un amplificateur d'écoute ; et
la figure 4 représente un mode de réalisation de poste téléphonique selon la présente invention.

Dans les figures, des mêmes références désignent des mêmes éléments.

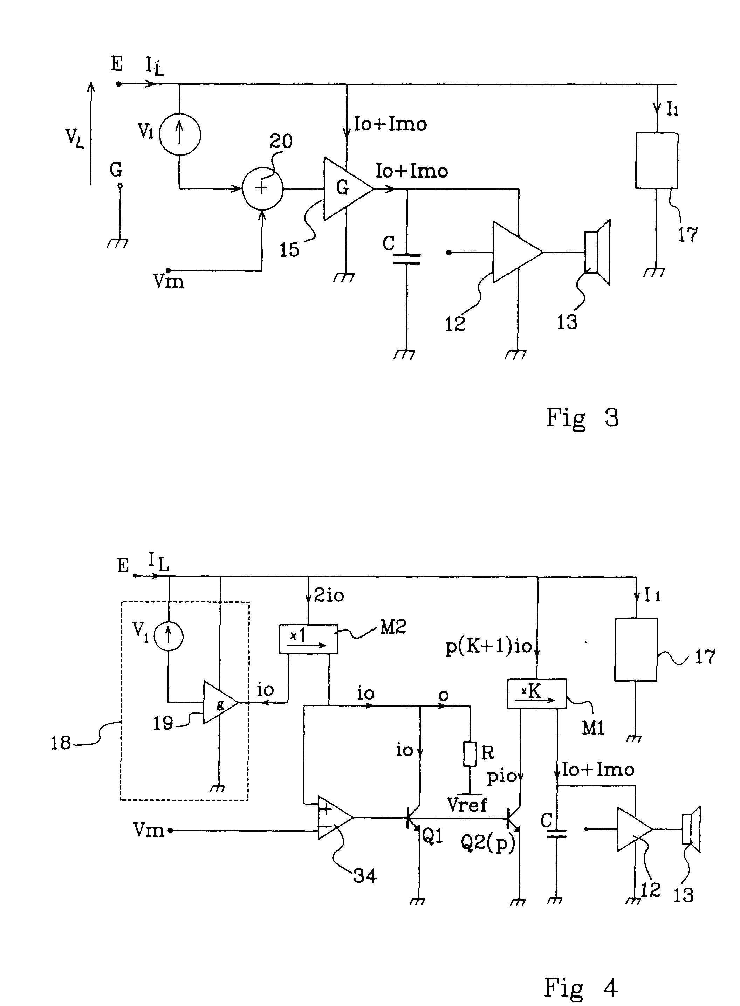

A la figure 3, un modulateur particulier est incorporé dans le circuit 10 d'alimentation de l'amplificateur 12, le courant de repos de ce modulateur constituant le courant d'alimentation de l'amplificateur 12. Le courant de repos de ce modulateur particulier est choisi égal à la somme du courant d'alimentation classique I₀ et du courant de repos Iₘ₀ du modulateur classique 16. Ainsi, le courant Iₘ₀, au lieu d'être consommé en vain, contribue à une augmentation du courant fourni à l'amplificateur 12.

Un sommateur 20 est disposé entre la source de tension V₁ et l'entrée du convertisseur 15. Le sommateur 20 reçoit en entrée le signal de parole Vₘ. On retrouve ainsi sur l'entrée du convertisseur 15 la tension classique V_{L}-V₁ à laquelle est superposé le signal de parole Vₘ.

Avec cette configuration, l'homme du métier saura réajuster la tension V₁ pour que, en l'absence de signal de parole Vₘ, le courant de sortie du convertisseur 15 (et donc le courant d'alimentation de l'amplificateur 12) soit égal à I₀+Iₘ₀. Alors, le courant de ligne moyen I_{L} s'exprime exactement de la même manière que dans la figure 1, à savoir, par I_{L} = I₀+I₁+Iₘ₀. Le poste téléphonique respecte donc le gabarit V_{L}=f(I_{L}). L'amplitude maximale du signal de parole Vₘ pourra être réajustée pour que le courant de ligne I_{L} soit modulé avec une amplitude adéquate.

Ainsi, par rapport au cas de la figure 1, le courant fourni à l'amplificateur 12 se trouve augmenté de Iₘ₀, c'est-à-dire de la valeur (5mA) du courant de repos du modulateur classique 16. Dans l'exemple où le courant de ligne I_{L} atteint une valeur minimale de 15mA, le courant fourni à l'amplificateur 12 est pratiquement doublé par rapport à sa valeur dans un poste classique.

La figure 4 illustre un mode de réalisation de poste téléphonique selon la présente invention adapté à l'architecture à miroirs de courant de la figure 2. Dans la figure 4, on retrouve le générateur de courant 18 et le miroir M1.

Selon l'invention, le courant de référence i₀, normalement fourni par le générateur 18 au miroir M1, est ici fourni à l'entrée d'un miroir de courant M2 relié à la borne E. Le miroir M2 répartit le courant i₀ entre une résistance R reliée à une tension de référence Vref et le collecteur d'un transistor Q1 à émetteur relié à la masse. La base du transistor Q1 est reliée à la sortie d'un amplificateur opérationnel 34 dont l'entrée non-inverseuse est reliée au collecteur du transistor Q1 et dont l'entrée inverseuse reçoit le signal de parole Vₘ. Un transistor Q2 est relié en parallèle sur la base et l'émetteur du transistor Q1 et son collecteur est relié à l'entrée du miroir M1 ; cette disposition permet de recopier le courant de collecteur du transistor Q1 sur l'entrée du miroir M1 en le multipliant par un facteur p égal au rapport des surfaces du transistor Q2 et du transistor Q1.

Avec cette configuration, le signal de parole Vₘ apparaît au point de connexion entre la résistance R et la sortie du miroir M2. La tension de référence Vref est choisie égale à la valeur de repos du signal de parole Vₘ. Ainsi, en l'absence de signal Vₘ, la totalité du courant de référence i₀ traverse le transistor Q1. Un courant pi₀ apparaît donc à l'entrée du miroir M1 et il apparaît à la sortie du miroir M1 un courant d'alimentation de l'amplificateur 12 de valeur pKi₀. Le courant soutiré à la ligne téléphonique en lieu et place du courant I₀+Iₘ₀ des figures précédentes vaut ici [2+p(K+1)]i₀, ce courant étant essentiellement le courant pKi₀ fourni à l'amplificateur 12 puisque K est grand (de l'ordre de 40) devant 1. L'homme du métier saura réajuster la tension V₁ pour obtenir [2+p(K+1)]i₀=I₀+Iₘ₀ afin de respecter le gabarit V_{L}=f(I_{L}).

Lorsqu'on applique un signal de parole Vₘ, il passe un courant modulé dans la résistance R qui se soustrait au courant i₀ passant dans le transistor Q1. On retrouve donc dans le transistor Q1 un courant modulé autour de i₀ qui est amplifié par le transistor Q2 et le miroir M1 avant d'être soutiré de la ligne téléphonique. L'homme du métier saura choisir la résistance R pour que le courant de ligne soit modulé avec une amplitude suffisante.

La présente invention est susceptible de nombreuses variantes et modifications qui apparaîtront à l'homme du métier, notamment en ce qui concerne la réalisation du modulateur.

## Revendications

1. Poste téléphonique relié à une ligne téléphonique et comprenant :
- un générateur (18) d'un courant de référence (i₀) proportionnel à la différence entre la tension (V_{L}) disponible sur la ligne et une tension de référence (V₁) ;
- un miroir de courant (M1) recevant un courant d'entrée proportionnel au courant de référence et alimentant un amplificateur d'écoute (12) avec un courant grand par rapport audit courant d'entrée ;
caractérisé en ce qu'il comprend un modulateur de courant (34, Q1, Q2, R) commandé par un signal de parole (Vm) et délivrant ledit courant d'entrée au miroir, le courant de repos du modulateur étant établi par ledit courant de référence.

2. Poste téléphonique selon la revendication 1, caractérisé en ce que le courant de repos d'alimentation de l'amplificateur d'écoute est choisi égal à la somme du courant classique (I₀) d'alimentation de l'amplificateur (12) et du courant de repos (Iₘ₀) d'un modulateur classique (16).

3. Poste téléphonique selon la revendication 1, caractérisé en ce que le courant d'alimentation de l'amplificateur (12) est aussi fourni à une capacité de filtrage (C).

4. Poste téléphonique selon la revendication 1, caractérisé en ce que le modulateur comprend un premier transistor (Q1) et un moyen résistif (R) alimentés par le courant de référence (i₀) ; et un deuxième transistor (Q2) dans lequel est recopié, avec un éventuel facteur multiplicatif (p), le courant traversant le premier transistor ; le courant traversant ce deuxième transistor étant le courant d'entrée dudit miroir.

5. Poste téléphonique selon la revendication 4, caractérisé en ce qu'il comprend un amplificateur (34) pilotant les bases des premier et deuxième transistors (Q1, Q2) et dont deux entrées différentielles sont reliées respectivement à une borne recevant le signal de parole (Vm) et au point de connexion entre le premier transistor et le moyen résistif (R).

## Patentansprüche

1. Mit einer Telefonleitung verbundener Telefonapparat, welcher umfaßt:
- einen Generator (18) zur Erzeugung eines Bezugsstroms (i₀), der proportional der Differenz zwischen der auf der Leitung verfügbaren Spannung (V_{L}) und einer Bezugsspannung (V₁) ist;
- einen Stromspiegel (M1), der einen zum Bezugsstrom proportionalen Eingangsstrom zugeführt erhält und einen Sprach- bzw. Mithörverstärker (12) mit einem im Verhältnis zu dem genannten Eingangsstrom großen Strom speist;
dadurch gekennzeichnet, daß der Apparat einen Strommodulator (34, Q1, Q2, R) aufweist, der von einem Sprachsignal (Vm) gesteuert wird und den genannten Eingangsstrom für den Stromspiegel liefert, wobei der Ruhestrom des Modulators durch den genannten Bezugsstrom eingestellt wird.

2. Telefonapparat nach Anspruch 1,
dadurch gekennzeichnet, daß der Speise-Ruhestrom des Sprach- bzw. Mithörverstärkers gleich der Summe aus dem herkömmlichen Speisestrom (I₀) des Verstärkers (12) und dem Ruhestrom (Iₘ₀) eines herkömmlichen Modulators (16) gewählt ist.

3. Telefonapparat nach Anspruch 1,
dadurch gekennzeichnet, daß der Speisestrom des Verstärkers (12) auch von einer Filterkapazität (C) geliefert wird.

4. Telefonapparat nach Anspruch 1,
dadurch gekennzeichnet, daß der Modulator einen ersten Transistor (Q1) und ein Widerstandsschaltmittel (R) aufweist, die mit dem Bezugsstrom (i₀) gespeist werden; sowie einen zweiten Transistor (Q2), in welchem der den ersten Transistor durchströmende Strom gegebenenfalls mit einem Multiplikationsfaktor (p) dupliziert wird; wobei der den zweiten Transistor durchfließende Strom der Eingangsstrom des genannten Stromspiegels ist.

5. Telefonapparat nach Anspruch 4,
dadurch gekennzeichnet, daß er einen Verstärker (34) aufweist, welcher die Basisanschlüsse des ersten und des zweiten Transistors (Q1, Q2) steuert und von welchem zwei Differentialeingänge mit einem das Sprachsignal (Vm) zugeführt erhaltenden Anschluß bzw. mit dem Verbindungspunkt zwischen dem ersten Transistor und der Widerstandsvorrichtung (R) verbunden sind.

## Claims

1. A telephone set connected to a telephone line, comprising:
- a generator (18) of a reference current (i⁰) proportional to the difference of an available line voltage (V_{L}) and a reference voltage (V₁);
- a current mirror (M1) receiving an input current proportional to said reference current and supplying a speech amplifier (12) with a current which is great with respect to said input current;
characterized in that it comprises:
a current modulator (34, Q1, Q2, R) controlled by a speech signal (Vₘ) and providing said input current to the mirror, the quiescent current of the modulator being established by said reference current.

2. The telephone set of claim 1, wherein the quiescent current of said modulator is selected to be equal to the sum of the conventional supply current (I₀) of said amplifier (12) and the quiescent current (Iₘ₀) of a conventional modulator (16).

3. The telephone set of claim 1, wherein the supply current of the speech amplifier is also supplied to a filter capacitor (C).

4. The telephone set of claim 1, wherein said modulator comprises a first transistor (Q1) and a resistive means (R), both supplied by the second reference current (i₀); and a second transistor (Q2) in which is duplicated, if needed with a multiplying factor (p), the current flowing through said first transistor; the current flowing through said second transistor being the first reference current.

5. The telephone set of claim 4, comprising an amplifier (34) controlling the bases of said first (Q1) and second (Q2) transistors and having two differential inputs connected to a terminal receiving said speech signal (Vₘ) and to the junction between said first transistor and said resistive means (R), respectively.
